# EUROPÄISCHE PATENTSCHRIFT

(11) **EP 2 755 882 B1**
(45) Veröffentlichungstag und Bekanntmachung des Hinweises auf die Patenterteilung: **23.03.2016**
(21) Anmeldenummer: 12778195.3
(22) Anmeldetag: 13.09.2012
(51) Int. Cl.: B62D 5/20, B62D 5/26, B62D 13/04, B62D 7/18, B62D 13/02

(54) **LENKACHSE**
STEERING AXLE
ESSIEU DIRECTEUR

(30) Priorität: 16.09.2011 AT 13412011
(43) Veröffentlichungstag der Anmeldung: 23.07.2014
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte KG
(86) Internationale Anmeldenummer: PCT/AT2012/000236
(87) Internationale Veröffentlichungsnummer: WO 2013/036978

(56) Entgegenhaltungen:
- AT-A4- 508 251
- DE-A1-102004 053 725

## Beschreibung

Die Erfindung betrifft eine Lenkachse gemäß dem Oberbegriff des Patentanspruches 1.

Derartige Lenkachsen werden insbesondere bei Anhängern mit gelenkten Achsen verwendet, wodurch ein besseres Verbleiben des Anhängers in der Spur eines Zugfahrzeuges erreicht werden soll. Dies wird in der Praxis oftmals nur ungenügend erreicht.

Aufgabe der Erfindung ist es eine Lenkachse der eingangs genannten Art anzugeben, mit welcher die genannten Nachteile vermieden werden können, mit welcher eine gute Spurtreue eines Anhängers einfach sichergestellt werden kann.

Erfindungsgemäß wird dies durch die Merkmale des Patentanspruches 1 erreicht.

Dadurch ergibt sich der Vorteil, dass die Abhängigkeit des Einschlages der Räder der Achse zueinander einfach an die vorgegebene Geometrie eines Gespanns angepasst werden kann. Dadurch kann sichergestellt werden, dass sämtliche Räder die kinematische Bedingung, dass sich ihre Drehachsen im Drehpunkt des Gespanns schneiden erfüllen. Dadurch kann der Verschleiß der Räder und die Beanspruchung des Untergrundes, insbesondere hinsichtlich Scherkräften gering gehalten werden. Weiters kann der Kraftaufwand für die Bewegung des Gespanns gering gehalten werden.

Die Unteransprüche betreffen weitere vorteilhafte Ausgestaltungen der Erfindung.

Weiters betrifft die Erfindung einen Anhänger mit wenigstens einer Lenkachse gemäß einem der Patentansprüche 1 bis 5, wodurch ein Anhänger mit den Vorteilen der Lenkachse bereitgestellt werden kann.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen bevorzugte Ausführungsformen beispielhaft dargestellt sind, näher beschrieben. Dabei zeigt:
Fig. 1 eine Schrägansicht einer Lenkachse;
Fig. 2 eine Draufsicht auf die Lenkachse gemäß Fig. 1, wobei weiters ein Nehmerzylinder schematisch dargestellt ist; und
Fig. 3 eine Draufsicht auf eine weitere Ausführungsform der Lenkachse.

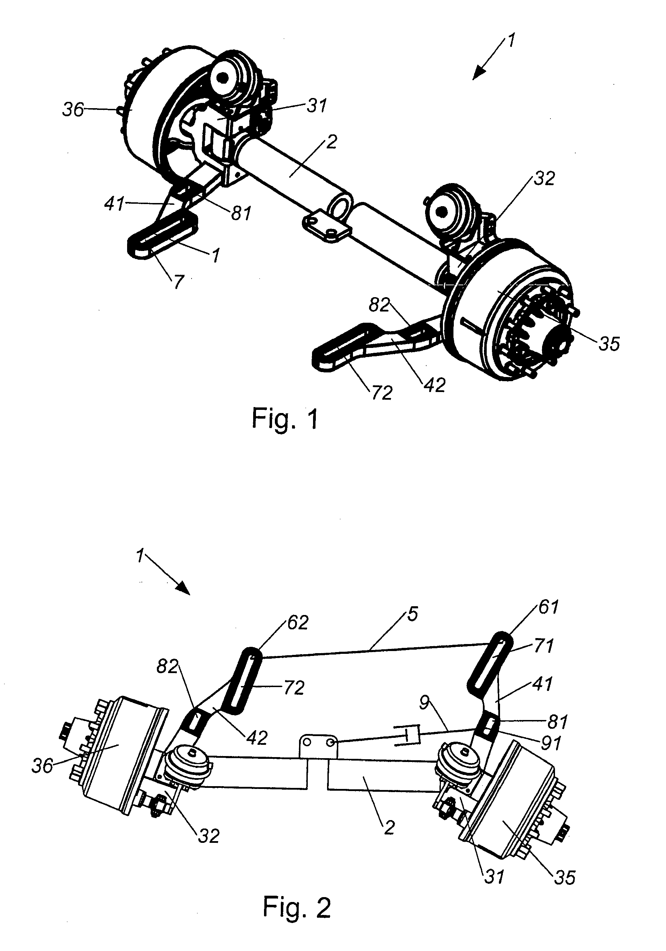

Die Fig. 1 bis 3 zeigen bevorzugte Ausführungsformen einer Lenkachse 1 für ein Fahrzeug, wobei beidseitig eines Achskörpers 2 Lenkhebel 31, 32 gelenkig gelagert sind und jeder der Lenkhebel 31, 32 mit einem Spurhebel 41, 42 wirkverbunden ist und eine Spurstange 5 beiderends an Angriffspunkten 61, 62 gelenkig mit den Spurhebeln 41, 42 verbunden ist.

Derartige Lenkachsen 1 werden üblicherweise bei Landfahrzeugen verwendet, wobei das Fahrzeug ein angetriebenes Zugfahrzeug oder ein gelenkter Anhänger sein kann. Mit den Lenkhebeln 31, 32 sind die Felgen 35, 36 verbunden, an denen die Räder montiert werden.

Die Spurhebel 41, 42 weisen eine Verstelleinrichtung 71, 72 zur Veränderung der Position der Angriffspunkte 61, 62 auf.

Insbesondere bei zwangsgelenkten Anhängern kann die Lenkachse 1 verwendet werden.

Durch die Spurhebel 41, 42 und die Spurstange 5 wird sichergestellt, dass die Verschwenkung eines der Räder die Verschwenkung des anderen der Räder der Lenkachse 1 bewirkt. Dadurch kann sichergestellt werden, dass nicht lediglich eines der Räder verschwenkt wird.

Durch die Veränderung der Angriffspunkte 61, 62 kann die Abhängigkeit des Verschwenkungswinkels der Räder zueinander verändert werden. Bevorzugt ist vorgesehen, dass bei einer Kreisfahrt das Innenliegende der Räder stärker verschwenkt ist als das Äußere der Räder. Es ist bekannt, dass durch eine geeignete Geometrie erreicht wird, dass die Verschwenkwinkel der Räder bei Geradeausfahrt gleich und null sind, bei einem Einschlag der Räder jedoch unterschiedlich sind. Weisen die Drehachsen der Räder zum Drehpunkt des Fahrzeuges, so können bei der Weiterbewegung des Fahrzeuges die Räder ohne seitliche Verschiebung bewegt werden. Weisen die Räder nicht zum Drehpunkt des Fahrzeuges, so üben die Räder bei der Weiterbewegung des Fahrzeuges eine Scherkraft in Richtung ihrer Drehachse auf den Untergrund aus, wobei gegebenenfalls eine Verschiebung der Räder mit einer Komponente in Richtung ihrer Drehachse erfolgt. Eine derartige Beanspruchung schädigt den Untergrund und erhöht die für die Bewegung des Fahrzeuges erforderliche Kraft. Weiters wird der Verschleiß der Räder erhöht.

Bei einem Gespann aus einem Zugfahrzeug und einem Anhänger, wobei der Anhänger eine starre Achse und wenigstens eine gelenkte Achse aufweist und das Zugfahrzeug ebenfalls eine starre Achse und eine gelenkte Achse aufweist, wie es beispielsweise in der Landwirtschaft oftmals üblich ist, wird der Drehpunkt des Gespanns im Wesentlichen durch die beiden starren Achsen bestimmt. Der Drehpunkt des Gespanns und somit der Drehpunkt des Anhängers wird bei Verwendung eines anderen Zugfahrzeuges verändert.

Mit der Verstelleinrichtung 71, 72 können die Angriffspunkte 61, 62 der Spurstange 5 und damit die Verschwenkwinkel der Räder zueinander verändert und an die jeweilige Situation des Gespanns angepasst werden. Dadurch kann auf einfache Weise die Bewegung des Gespanns verändert werden, wodurch insbesondere die erforderliche Kraft zum Ziehen des Anhängers erheblich reduziert werden kann. Weiters kann der Verschleiß gering gehalten werden.

Eine einfache Ausbildung der Verstelleinrichtung 71, 72 stellt die Ausbildung als Langloch dar. Diese bietet weiters den Vorteil einer sehr genauen Einstellung.

Bei einer anderen Ausführung kann vorgesehen sein, dass die Spurstange 5 in lediglich einigen Positionen im Einstellbereich angeordnet werden kann.

Für die Verstelleinrichtung 71, 72 können die für diese Funktionalität dem Fachmann bekannten Einrichtungen vorgesehen werden.

Die Lenkachse 1 kann als Mittelkonusachse ausgebildet sein, wie dies in den Fig. 1 und 2 dargestellt ist.

Bei anderen Ausführungen kann auch vorgesehen sein, dass die Lenkachse 1 als Nachlauf-Lenkachse ausgebildet ist. Durch diese Ausbildung kann der Anhänger auch einfach an ein Zugfahrzeug gekoppelt werden, welches die Voraussetzungen für die Zwangslenkung nicht bereitstellt und die Nachlauf-Lenkachse freigegeben werden. Dabei können die bekannten Eigenschaften einer Nachlauf-Lenkachse ausgenützt werden.

Die Spurhebel 41, 42 können - in Einbaulage in Bezug auf eine Vorwärtsfahrt gesehen - vor oder hinter dem Achskörper 2 angeordnet sein.

Bevorzugt ist vorgesehen, dass zumindest eine weitere Verstelleinrichtung 81, 82 zur Veränderung der Position eines weiteren Angriffspunktes 91 für einen Nehmerzylinder 9 eines Zwangslenkungssystems vorgesehen ist.

Bei der Ausführung gemäß den Fig. 1 und 2 weisen die Spurhebel 41, 42 die zumindest eine weitere Verstelleinrichtung 81, 82 auf. Dabei ist an jedem der Spurhebel 41, 42 jeweils eine der weiteren Verstelleinrichtungen 81, 82 angeordnet. Es kann auch vorgesehen sein, dass lediglich an einem der Spurhebel 41, 42 eine der zumindest einen weiteren Verstelleinrichtung 81, 82 angeordnet ist. Dabei kann die Konstruktion einfach gehalten und die Anzahl der mit den Lenkhbeln 31, 32 wirkverbundenen Hebeln gering gehalten werden.

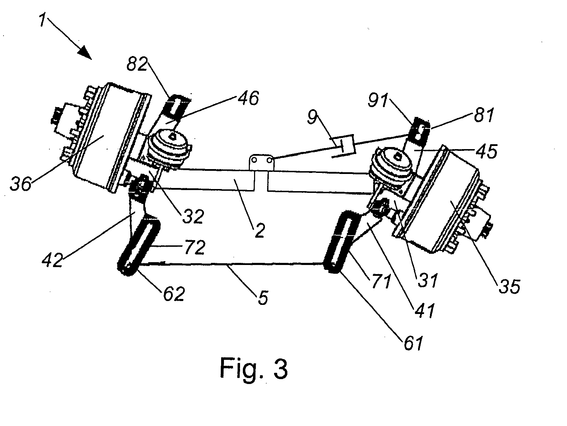

Bei der Ausführungsform gemäß Fig. 3 ist die zumindest eine weitere Verstelleinrichtung 81, 82 auf einem mit einem der Lenkhebel 31, 32 wirkverbundenen Verstellhebel 45, 46 angeordnet. Dabei können die Spurhebel 41, 42 und die Verstellhebel 45, 46 einfach an die jeweils zu erwartenden Kräfte angepasst werden und insgesamt eine besonders zuverlässige Lenkachse 1 bereitgestellt werden.

Es kann vorgesehen sein, dass der Verstellhebel 45, 46 bei lediglich einem der Lenkhebel 31, 32 ausgebildet ist. Bei anderen Ausführungen kann, wie in Fig. 3 gezeigt, bei den Lenkhebeln 31, 32 jeweils einer der Verstellhebel 45, 46 ausgebildet sein.

Mit der Verstelleinrichtung 71, 72 für die Spurstange 5 kann der Verschwenkungswinkel der Räder zueinander verändert und eingestellt werden, wobei mit der weiteren Verstelleinrichtung 81, 82 der Verschwenkungswinkel der Räder in Abhängigkeit des Signals der Zwangslenkungseinrichtung verändert werden kann.

Dabei kann vorgesehen sein, dass das Signal der Zwangslenkungseinrichtung von dem Winkel zwischen dem Zugfahrzeug und dem Anhänger abgenommen wird. Mit der weiteren Verstelleinrichtung 81, 82 kann der Verschwenkungswinkel dann in Abhängigkeit von dem Winkel zwischen dem Zugfahrzeug und dem Anhänger verändert werden.

Die Veränderung des Verschwenkungswinkels in Abhängigkeit von dem Winkel zwischen dem Zugfahrzeug und dem Anhänger kann beispielsweise auch durch die Verwendung unterschiedlicher Nehmerzylinder verändert werden, wobei durch das Vorsehen der weiteren Verstelleinrichtung 81, 82 eine besonders einfache Einstellmöglichkeit bereitgestellt werden kann.

Mit einem Anhänger mit der Lenkachse 1 können die oben beschriebenen Vorteile bereitgestellt werden, wobei eine hohe Sicherheit und Langlebigkeit des gesamten Gespanns erreicht wird. Insbesondere kann die erforderliche Leistung des Zugfahrzeuges gering gehalten werden.

## Patentansprüche

1. Lenkachse (1) für ein Fahrzeug, wobei beidseitig eines Achskörpers (2) Lenkhebel (31, 32) gelenkig gelagert sind und jeder der Lenkhebel (31, 32) mit einem Spurhebel (41, 42) wirkverbunden ist und eine Spurstange (5) beiderends an Angriffspunkten (61, 62) gelenkig mit den Spurhebeln (41, 42) verbunden ist, wobei die Spurhebel (41, 42) eine Verstelleinrichtung (71, 72) zur Veränderung der Position der Angriffspunkte (61, 62) aufweisen, **dadurch gekennzeichnet, dass** zumindest eine weitere Verstelleinrichtung (81, 82) zur Veränderung der Position eines weiteren Angriffspunktes (91) für einen Nehmerzylinder (9) eines Zwangslenkungssystems vorgesehen ist.

2. Lenkachse (1) nach Anspruch 1, **dadurch gekennzeichnet, dass** die Verstelleinrichtung (71, 72) als Langloch ausgebildet ist.

3. Lenkachse (1) nach Anspruch 1 oder 2, **dadurch gekennzeichnet, dass** die Lenkachse (1) als Mittelkonusachse ausgebildet ist.

4. Lenkachse (1) nach Anspruch 1 oder 2, **dadurch gekennzeichnet, dass** die Lenkachse (1) als Nachlauf-Lenkachse ausgebildet ist.

5. Lenkachse (1) nach einem der Ansprüche 1 bis 4, **dadurch gekennzeichnet, dass** einer der Spurhebel (41, 42) die zumindest eine weitere Verstelleinrichtung (81, 82) aufweist.

6. Lenkachse (1) nach einem der Ansprüche 1 bis 4, **dadurch gekennzeichnet, dass** die zumindest eine weitere Verstelleinrichtung (81, 82) auf einem mit einem der Lenkhebel (31, 32) wirkverbundenen Verstellhebel (45, 46) angeordnet ist.

7. Anhänger mit wenigstens einer Lenkachse (1) nach einem der Ansprüche 1 bis 6.

## Claims

1. A steering axle (1) for a vehicle, wherein steering arms (31, 32) are hinged to both sides of an axle body (2), and each of the steering arms (31, 32) is operatively connected to a tie rod arm (41, 42), and a tie rod (5) is hinged at both ends at points of attack (61, 62) to the tie rod arms (41, 42), wherein the tie rod arms (41, 42) comprise an adjusting device (71, 72) for varying the position of the point of attack (61, 62), **characterized in that** at least one further adjusting device (81, 82) is provided for changing the position of a further point of attack (91) for a slave cylinder (9) of a forced steering system.

2. A steering axle (1) according to claim 1, **characterized in that** the adjusting device (71, 72) is formed as a slot.

3. A steering axle (1) according to claim 1 or 2, **characterized in that** the steering axle (1) is formed as a central conical axle.

4. A steering axle (1) according to claim 1 or 2, **characterized in that** the steering axle (1) is formed as a trailing steering axle.

5. A steering axle (1) according to one of the claims 1 to 4, **characterized in that** one of the tie rod arms (41, 42) comprises the at least one further adjusting device (81, 82).

6. A steering axle (1) according to one of the claims 1 to 4, **characterized in that** the at least one further adjusting device (81, 82) is arranged on an adjusting lever (45, 46) which is operatively connected to one of the steering arms (31, 32).

7. A trailer, comprising at least one steering axle (1) according to one of the claims 1 to 6.

## Revendications

1. Essieu directeur (1) pour un véhicule, dans lequel des leviers de direction (31, 32) sont supportés de façon articulée de part et d'autre d'un corps d'essieu (2) et chacun des leviers de direction (31, 32) est en liaison active avec un levier de maintien de trajectoire (41, 42) et une barre d'accouplement (5) est reliée aux leviers de maintien de trajectoire (41, 42) à ses deux extrémités de façon articulée sur des points d'accrochage (61, 62), les leviers de maintien de trajectoire (41, 42) présentant un dispositif d'ajustement (71, 72) pour changer la position des points d'accrochage (61, 62), **caractérisé en ce qu'**au moins un autre dispositif d'ajustement (81, 82) est prévu pour changer la position d'un autre point d'accrochage (91) pour un cylindre récepteur (9) d'un système de direction forcée.

2. Essieu directeur (1) selon la revendication 1, **caractérisé en ce que** le dispositif d'ajustement (71, 72) est conformé comme un trou oblong.

3. Essieu directeur (1) selon la revendication 1 ou 2, **caractérisé en ce que** l'essieu directeur (1) est conformé comme un essieu à cône central.

4. Essieu directeur (1) selon la revendication 1 ou 2, **caractérisé en ce que** l'essieu directeur (1) est conformé comme un essieu directeur asservi.

5. Essieu directeur (1) selon l'une des revendications 1 à 4, **caractérisé en ce que** l'un des leviers de maintien de trajectoire (41, 42) présente l'au moins un autre dispositif d'ajustement (81, 82).

6. Essieu directeur (1) selon l'une des revendications 1 à 4, **caractérisé en ce que** l'au moins un autre dispositif d'ajustement (81, 82) est disposé sur un levier d'ajustement (45, 46) en liaison active avec l'un des leviers de direction (31, 32).

7. Remorque avec au moins un essieu directeur (1) selon l'une des revendications 1 à 6.
